# EUROPÄISCHE PATENTSCHRIFT

(11) **EP 0 942 192 B1**
(45) Veröffentlichungstag und Bekanntmachung des Hinweises auf die Patenterteilung: **11.06.2003**
(21) Anmeldenummer: 99810194.3
(22) Anmeldetag: 05.03.1999
(51) Int. Cl.: F16F 1/18, B41F 31/30, B41F 13/26

(54) **Biegefederelement**
Flexing spring element
Elément de ressort à flexion

(30) Priorität: 13.03.1998 DE 19811098
(43) Veröffentlichungstag der Anmeldung: 15.09.1999
(73) Patentinhaber: Maschinenfabrik Wifag, 3001 Bern (CH)
(72) Erfinder: Imhof, Robert, 3014 Bern (CH); Gertsch, Peter, 3145 Niederscherli (CH)

(56) Entgegenhaltungen:
- CH-A- 476 577
- DE-A- 2 100 831
- DE-C- 958 792

## Beschreibung

Die Erfindung betrifft ein Biegefederelement. Sie betrifft ferner dessen Verwendung als Lastaufhängung, beispielsweise zum Lagern und Positionieren einer Walze einer Druckmaschine, insbesondere einer Walze eines Farbwerks oder Feuchtwerks.

In dieser Verwendung ist die Walze gegen wenigstens eine Gegenwalze angestellt und beidseits in je einer Lagerschale gelagert. Die Lagerschalen sind mittels mindestens eines erfindungsgemäßen Biegefederelements mit einem Maschinengestell verbunden.

Bei einer aus der CH 476 577 bekannten Vorrichtung besteht das Lager aus einem mit einer Gestellwand verbundenen ortsfesten Lagerzapfen und einem zur Aufnahme eines Zapfens der Walze dienenden Gehäuse, wobei der Lagerzapfen und das Gehäuse nicht-metallisch nachgiebig und einstellbar miteinander verbunden sind. Dabei wird der Lagerzapfen von dem Lagergehäuse umgeben. Die Walze wird an zwei Gegenwalzen dadurch angestellt, daß mittels einer das Lagergehäuse gegen den Lagerzapfen radial abstützenden Einstellschraube oder durch Beaufschlagung mit einem Druckmedium die Lage des Lagergehäuses relativ zum Lagerzapfen eingestellt wird. Ein Gummipuffer, der die nicht-metallische nachgiebige Verbindung zwischen dem Lagerzapfen und dem Lagergehäuse herstellt, sorgt dafür, daß das Lagergehäuse bei entsprechender Betätigung der Einstellschraube bzw. nach Druckablaß wieder in seine Ausgangslage koaxial zum Lagerzapfen zurückgeführt wird.

Die Erfindung hat es sich zur Aufgabe gemacht, ein Biegefederelement zu schaffen, das bei Einbau unter Vorspannung auf eine von dem Biegefederelement getragene Last eine einfach und dem Anwendungsfall optimal angepaßt einstellbare Vorspannkraft erzeugt und dennoch kompakt baut.

Diese Aufgabe wird durch ein Biegefederelement gelöst, das wenigstens ein Befestigungsende, ein Lastende und einen sich zwischen dem Befestigungsende und dem Lastende erstreckenden federelastisch biegbaren Biegebereich umfaßt, der eine Mäanderform aufweist mit als Biegebalken wirkenden Mäanderarmen. Mit dem Befestigungsende wird das Biegefederelement an einem Stützkörper derart befestigt, daß die vorgenannten Mäanderarme von dem Stützkörper abwechselnd abragen und wieder auf diesen Stützkörper zuragen. Die Last wird am Lastende des Biegefederelements befestigt. Das Biegefederelement weist wenigstens zwei der vorgenannten Mäanderarme auf, wobei ein erster dieser Mäanderarme vom Befestigungsende, d.h. im eingebauten Zustand vom Stützkörper, abragt und im Wege einer Umlenkung durch den zweiten dieser Mäanderarme wieder in Richtung auf das Befestigungsende zu zurückgeführt wird. Eine abstützende Verbindung zwischen dem zweiten Mäanderarm und dem Befestigungsende besteht nur über den ersten Mäanderarm.

Bereits in dieser Grundform des erfindungsgemäßen Biegefederelements wird die wirksame Federlänge gegenüber einem einfachen elastischen Biegebalken erheblich verlängert. Die Last kann in einem geringeren Abstand vom Befestigungsende des Biegefederelements, d.h. vom Stützkörper, angeordnet werden, als dies bei gleicher wirksamer Biegefederlänge bei Verwendung eines beispielsweise einfach geraden Biegebalkens möglich wäre.

Obgleich die Last bereits am freien Ende des zweiten Mäanderarms befestigt werden könnte, ist der zweite Mäanderarm vorzugsweise mit einem wieder von dem Befestigungsende wegragenden dritten Mäanderarm verbunden. Am freien Ende des dritten Mäanderarms wird die Last befestigt. In dieser Art können grundsätzlich auch mehr als drei Mäanderarme, jeweils ebenfalls als Biegebalken wirkend, vorgesehen sein. Es addieren sich mehrere Biegebalken, nämlich die von der Seitenwand ab- und die auf die Seitenwand zuragenden Mäanderarme, zu einem Federelement. Es werden pro Federelement mehrere Biegebalken hintereinander geschaltet.

Auch die Biegeeigenschaften des Federelements quer zur Anstellrichtung können durch die Dimensionierung der vorgenannten Mäanderarme und/oder von Verbindungsbügeln zwischen den Mäanderarmen dem Anwendungsfall angepaßt sehr genau eingestellt werden.

Die inneren Reibungsverluste beim Abfedern sind in der Praxis vernachlässigbar. Bevorzugt werden metallische Federelemente. Indem die Federung der Lagerung so ausgebildet ist, daß keine oder allenfalls vernachlässigbare Reibungsverluste beim Abfedern auftreten, reagiert die Lagerung besonders sensibel auf kleine und kleinste Veränderungen der Andruckkraft. Kleine und rasche Änderungen werden unverzüglich ausgeglichen. Gegebenenfalls kann eine Dämpfung eingesetzt werden, um größere Änderungen der Andruckkraft und dadurch verursachte Verlagerungen der Last zu dämpfen, wobei jedoch zumindest das erste Ansprechen auf die Lageänderung zu Beginn einer Änderung ungedämpft erfolgen sollte.

Das erfindungsgemäße Biegfederelement eignet sich besonders zur Aufhängung bzw. Lagerung eines Rotationskörpers einer Druckmaschine, insbesondere zur Lagerung solcher Rotationskörper, die an einen Gegenrotationskörper angestellt im praktischen Betrieb an den Gegenrotationskörper mit möglichst konstanter Antstellkraft angedrückt werden sollen.

In einer besonders bevorzugten Ausführungsform zum Lagern und Positionieren einer durch einen Druckmaschinenrotationskörper gebildeten Last, beispielsweise einer Farbwalze, wird der Rotationskörper beidseits von je wenigstens einem Federelement in Anstellrichtung gedrückt und federnd in und gegen die Anstellrichtung schwimmend gelagert.

Im folgenden wird das Biegefederelement als Federelement bezeichnet. Der Begriff "Walze" wird stellvertretend auch für andere Rotationskörper und Lasten im Allgemeinen verwendet.

In einer weiteren Ausführungsform wird solch eine Walze auch quer zur Anstellrichtung schwimmend gelagert und federelastisch gegen die Gegenwalze oder, im Falle mehrerer Gegenwalzen, gegen jede der Gegenwalzen gedrückt.

Durch das federelastische Auffangen der Walze, insbesondere in und gegen die Federrichtung, wird eine selbst einstellende und selbst nachstellende Lagerung geschaffen, durch die die Walze unabhängig von ihrer Position zur wenigstens einen Gegenwalze mit einem sehr konstanten Druck an diese Gegenwalze bzw. Gegenwalzen angedrückt wird. Vorzugsweise wird die Andruck- bzw. Anstellkraft ausschließlich von dem wenigstens einen Federelement beidseits der Walze erzeugt. Durch das Abfedern der ansonsten zumindest in und gegen die Anstellrichtung frei sich bewegenden Walze wird sowohl ein Wachsen der Walze durch Fliehkräfte und Erwärmung als auch ein Schrumpfen der Walze durch beispielsweise chemische Einflüsse kompensiert. Wachsen und Schrumpfen der Walze haben bei erfindungsgemäß ausgebildeter Lagerung keine Änderungen des Anpreßdrucks der Walze mehr zur Folge, die in der Praxis noch Relevanz haben könnten. Auch erheblich geschwindigkeitsabhängige Druckerhöhungen, die durch ein Verdrängen eines inkompressiblen Gummibelags der Walze bei starrer oder quasi starrer Walzenpositionierung zwangsläufig eintreten, werden durch die Erfindung vermieden.

Die Lagerung ist schließlich auch vergleichsweise unempfindlich gegen fertigungsbedingte Abweichungen der Walzendurchmesser, d.h. die Walzen müssen auch bei größerer Streuung der Durchmesser, die durchaus bis zu etwa 3 bis 4 mm vom Nennmaß abweichen dürfen, nicht jeweils neu einjustiert werden.

Die Lagerung wirkt wie ein elastischer Biegebalken, der von einer Maschinenseitenwand als Stützkörper abragend an dieser Maschinenseitenwand fest eingespannt ist und an dessen freien Ende die Lagerschale der Walze bzw. ein Aufnahmekörper der Lagerschale starr befestigt ist. Die Walze hängt derart zwischen zwei solchen elastischen Biegebalken, die von zwei einander zugewandten Maschinenseitenwänden in der beschriebenen Weise abragen. Die elastischen Rückstellkräfte der beiden beidseits der Walze eingespannten Biegebalken, wobei pro Walzenseite mehrere Federelemente mit je mehreren Mäanderarmen einen Biegebalken bilden, federn die Walze schwimmend ab.

Bevorzugt sind pro Lagerung bzw. Aufhängung wenigstens zwei Federelemente vorgesehen, grundsätzlich genügt jedoch auch eines. Vorteilhaft ist es, wenn die wenigstens zwei Federelemente einen Abstand in Bezug auf die Anstellrichtung voneinander aufweisen. Ferner kann wenigstens ein drittes Federelement quer zur Anstellrichtung beabstandet von den vorgenannten wenigstens zwei Federelementen angeordnet sein. Durch die Dimensionierung und/oder Anordnung der Federelemente kann erreicht werden, daß die erfindungsgemäße Lagerung auf die von ihr getragene Last kein Drehmoment ausübt, sondern die Last in und gegen eine gewünschte Richtung, gegebenenfalls auch quer dazu, sauber geradführt.

In bevorzugten Ausführungsbeispielen kann die Lage der Federelemente relativ zur Gegenwalze verändert werden. Vorzugsweise kann dies durch Veränderung des Einspannorts des Federelements am Maschinengestell erfolgen. Grundsätzlich könnte auch bei festem Einspannort an der Maschine die Einspannposition an der Lagerschale bzw. an einem Aufnahmekörper für die Lagerschale variiert werden. Dabei kann die Position der Federelemente in einem ersten Ausführungsbeispiel bezüglich der Maschinenseitenwand sowohl in X- als auch in Y-Richtung eingestellt werden, so daß der auf die Walze wirkende, resultierende Federkraftvektor mit dem für eine optimale Walzenanstellung erforderlichen Kraftvektor übereinstimmt.

Bei schnell laufenden großen Walzen hat es sich auch als vorteilhaft erwiesen, die Walze zwangsweise in und gegen die Anstellrichtung bewegbar zu führen. Ist solch eine Walze gegen zwei Gegenwalzen angestellt, so erfolgt die Führung entlang der Winkelhalbierenden, d.h. die Winkelhalbierende verläuft in Anstellrichtung. Dies gilt insbesondere für Zwischenwalzen, bei denen durch das große Antriebsmoment am Walzenumfang die Position der Walze auf unerwünschte Weise erheblich beeinflußt werden kann.

Die Erfindung wird nachfolgend anhand von bevorzugten Ausführungsbeispielen beschrieben. Es zeigen:
- Fig. 1: eine Reiterwalze;
- Fig. 2: eine Zwischenwalze;
- Fig. 3: eine Lagerung der Reiterwalze der Fig. 1 in einem Längsschnitt senkrecht zur Anstellrichtung;
- Fig. 4: die Lagerung nach Fig. 3 im Längsschnitt der Anstellrichtung;
- Fig. 5: die Lagerung im Querschnitt A-A nach Fig. 3;
- Fig. 6: die Lagerung der Walze nach Fig. 2 in einem Längsschnitt senkrecht zur Anstellrichtung;
- Fig. 7: die Lagerung nach Fig. 6 im Längsschnitt der Anstellrichtung;
- Fig. 8: die Lagerung im Querschnitt B-B nach Fig. 6;
- Fig. 9: eine Lagerung mit einer ersten Ausführungsform für ein erfindungsgemäßes Federelement;
- Fig. 10: die Lagerung nach Figur 9 zusätzlich mit einer Vorspannkraftverstellung mittels Einstellfeder;
- Fig. 11: ein für die Lagerung nach den Figuren 9 und 10 verwendbares Doppelfederelement im unbelasteten Zustand;
- Fig. 12: das Doppelfederelement nach Figur 11 unter Belastung nur in Anstellrichtung;
- Fig. 13: das Doppelfederelement nach Figur 11 unter Belastung in Anstellrichtung und quer zur Anstellrichtung; und
- Fig. 14: ein erfinungsgemäßes Federelement in Einzeldarstellung.

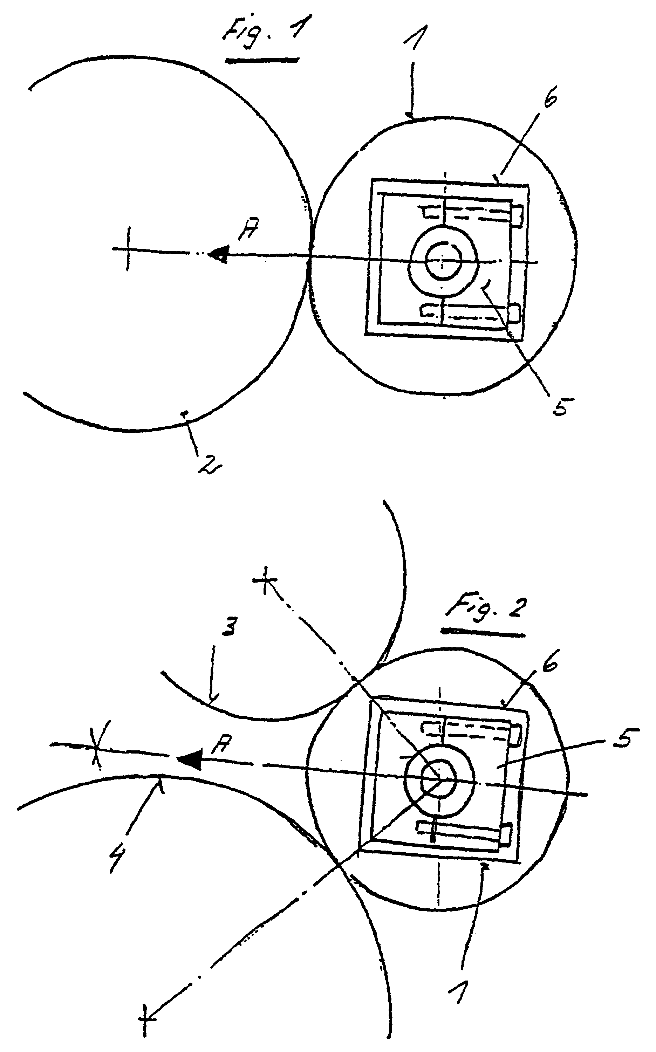

Fig. 1 zeigt, stellvertretend für andere Lasten, eine sogenannte Reiterwalze 1, einer Druckmaschine, insbesondere einer Rollenrotationsdruckmaschine. Die Walze 1 ist gegen eine einzige, feststehende Gegenwalze 2 angestellt. Die Anstellrichtung A weist von der Drehachse der Walze 1 zur Drehachse der Gegenwalze 2. In die Anstellrichtung A weist idealerweise auch die auf die Walze 1 wirkende, resultierende Anstellkraft.

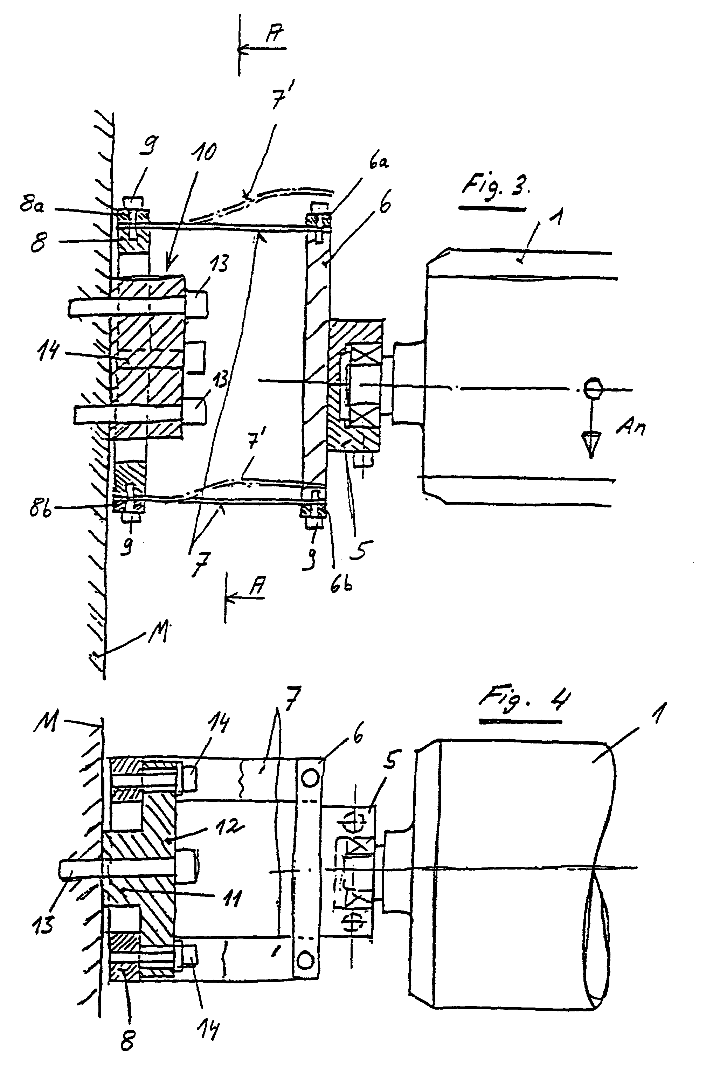

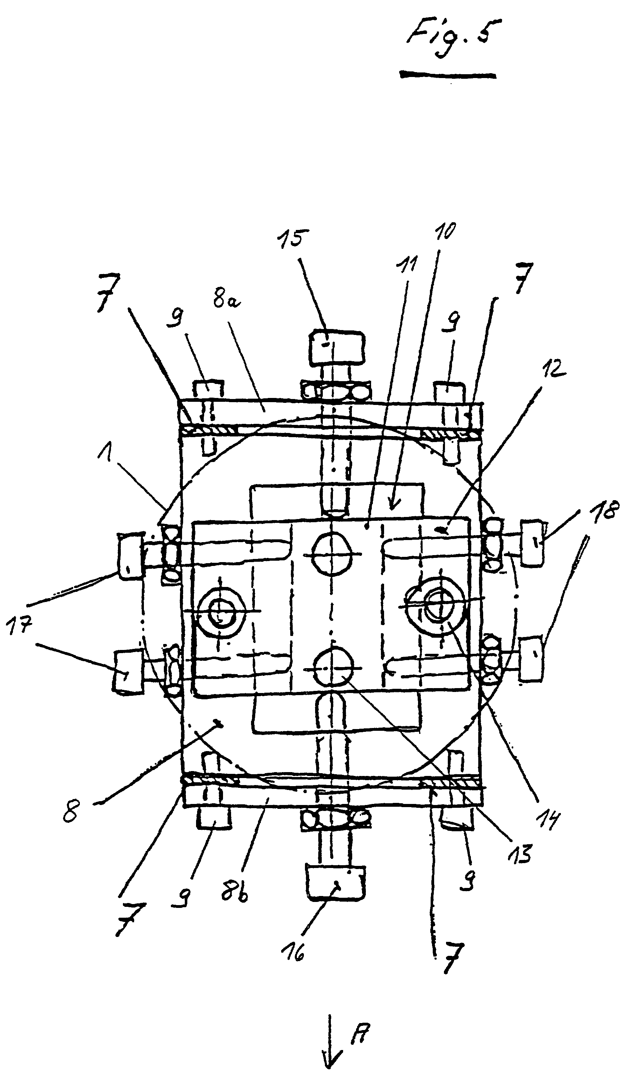

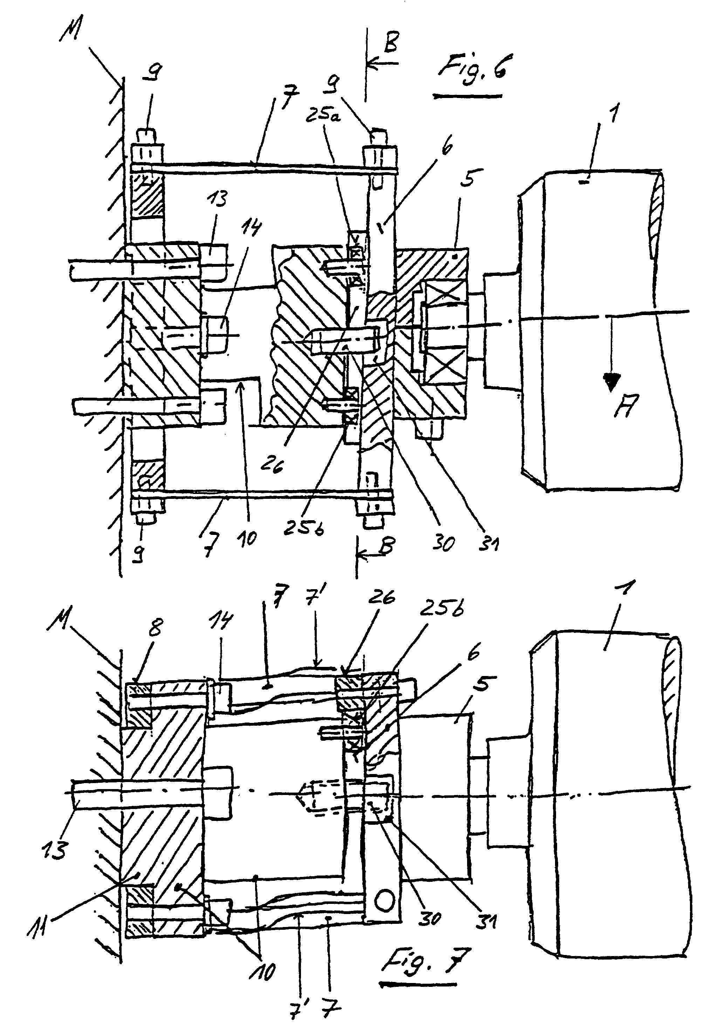

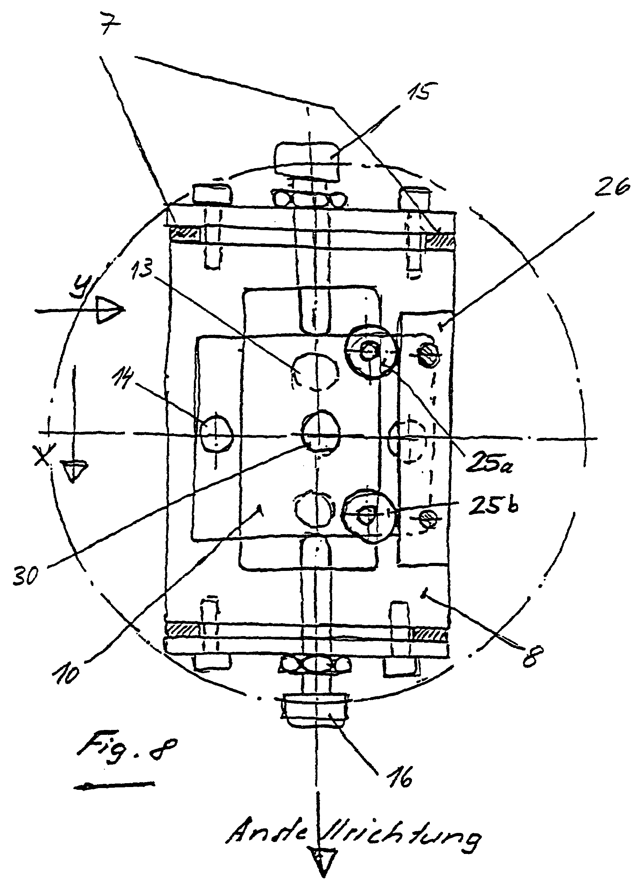

Fig. 2 zeigt eine sogenannte Zwischenwalze 1, die gegen zwei feststehende Gegenwalzen 3 und 4 angestellt ist. Die Anstellrichtung A weist entlang der Winkelhalbierenden des von den Drehachsen der Walzen 1, 3 und 4 gebildeten Dreiecks, ausgehend von der Drehachse der Walze 1 zwischen den beiden Drehachsen der Walzen 3 und 4 hindurch. Auch im Ausführungsbeispiel der Fig. 2 weist der Kraftvektor der auf die Walze 1 wirkenden, resultierenden Anstellkraft idealerweise in Anstellrichtung A.

Die Walze 1 ist in beiden Konfigurationen, d.h. bei Verwendung als Reiterwalze und auch bei Verwendung als Zwischenwalze, an ihren beiden Walzenzapfen jeweils in einer zweiteiligen Lagerschale 5 gelagert, die an einem Aufnahmekörper 6 befestigt ist, der seinerseits in erfindungsgemäßer Weise an einer ihm zugewandten Seitenwand eines Maschinengestells abgestützt ist. Die Lagerung zu beiden Seiten der Walze 1 ist jeweils gleich ausgebildet.

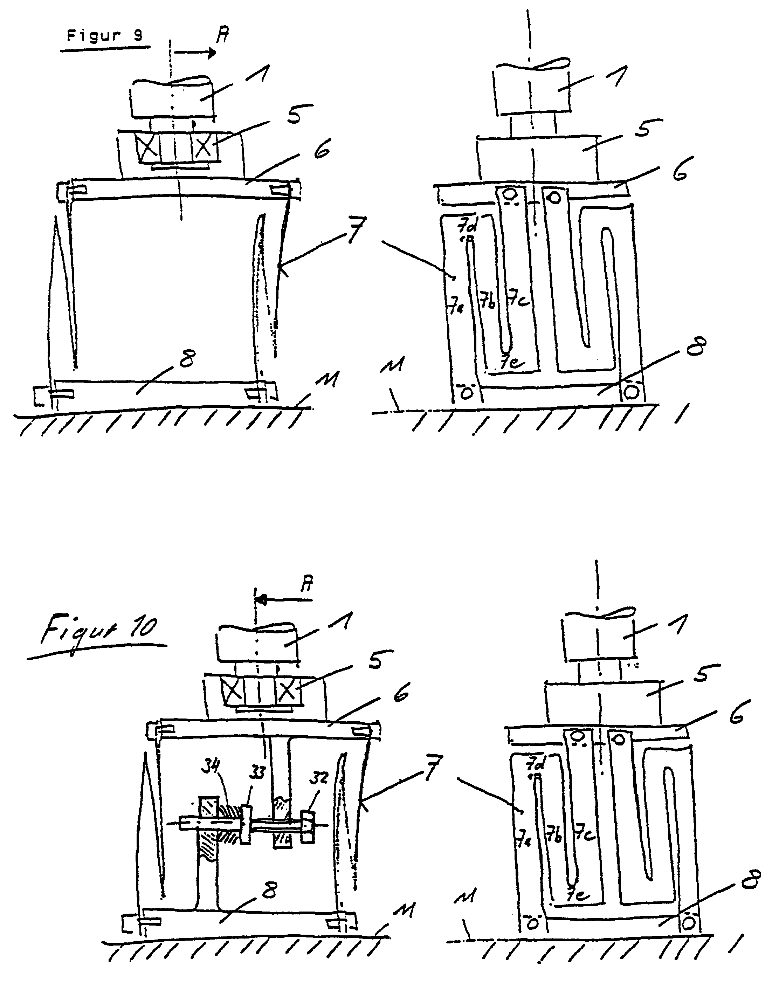

Die Figuren 3 bis 5 zeigen die Lagerung der Walze 1 der Figur 1. Die gleiche Lagerung kann jedoch auch bei der Zwischenwalze 1 der Konfiguration der Fig. 2 eingesetzt werden.

Dargestellt ist eines der beiden Zapfenenden der Walze 1. Das andere Zapfenende ist in gleicher Weise gelagert. Das Zapfenende ist in der zweiteiligen Lagerschale 5 aufgenommen, die am Aufnahmekörper 6 befestigt ist, der mittels Federelementen 7 an einem Schlitten 8 angebracht ist. Der Schlitten 8 ist seinerseits in einem Führungsbock 10 gehalten, der mit einer Seitenwand des Maschinengestells M nicht beweglich verbunden ist. Der Aufnahmekörper 6 und der Schlitten 8 sind jeweils Plattengebilde. Während der Aufnahmekörper 6 durch eine einfache Platte mit geeigneten Befestigungsmöglichkeiten für die Lagerschale 5 und die Federelemente 7 gebildet wird, handelt es sich bei dem Schlitten 8 um eine Platte, die zum Zwecke der Verschiebbarkeit gegenüber dem Führungsbock 10 in ihrem mittleren Bereich durchbrochen und in diesem durchbrochenen Bereich von einem Führungsteil 11 des Führungsbocks 10 durchragt wird. Der Führungsbock 10 ist im Bereich seines Führungsteils 11 mittels zweier durchgehender Schrauben 13 mit dem Maschinengestell M verschraubt.

Die Verbindung zwischen dem Aufnahmekörper 6 und dem Schlitten 8 wird ausschließlich durch vier Federelemente 7 hergestellt. Jedes der Federelemente 7 ist eine metallische Blattfeder, die jeweils für sich und auch in Kombination mit den anderen Federelementen 7 als von der Seitenwand des Maschinengestells M abragender elastischer Biegebalken wirkt. Jedes der Federelemente 7 ist stabförmig mit einem für die federnde Lagerung geeigneten Querschnitt in Bezug auf Querschnittsform und -abmessungen.

Die Federelemente 7 sind, wie unter Berücksichtigung von Fig. 5 leicht m erkennen ist, symmetrisch zur Drehachse der Walze 1 an der Ecken eines Rechtecks eingespannt. Der Aufnahmekörper 6, der Schlitten 8 und die vier Federelemente 7 bilden zusammen Kanten eines Quaders mit einer im angestellten Zustand der Walze 1 in etwa in Verlängerung der Drehachse der Walze 1 liegenden Mittellängsachse. Ein Achsenversatz, insbesondere in oder entgegen der Anstellrichtung ist auch möglich; es muß allerdings die Vorspannkraft, d.h. die Anstellkraft, in der gewünschten Stärke erzielt werden.

Die Federelemente 7 sind jeweils mit einem ersten Ende mittels Bügeln 8a und 8b am Schlitten 8 und einem zweiten Enden mittels Bügeln 6a und 6b am Aufnahmekörper 6 fest eingespannt. Zum Zwecke des Einspannens sind diese Bügel 6a, 6b, 8a und 8b mittels Schrauben 9, die Federelemente 7 durchdringend, auf jeweils einander gegenüberliegenden Stirnwänden des Aufnahmekörpers 6 bzw. des Schlittens 8 aufgeschraubt. Die Federelemente 7 werden sandwichartig zwischen dem Aufnahmekörper 6 und dessen Bügeln sowie dem Schlitten 8 und dessen Bügeln eingespannt.

In Fig. 3 sind in durchgezogenen Linien die Federlemente 7 in ihrer Ausgangslage, d.h. im entspannten Zustand, dargestellt. Zusätzlich ist die Form der dann mit 7' bezeichneten Federelemente bei Anstellung der Walze 1 an ihre Gegenwalze in punkststrichlierten Linien eingezeichnet. Die Anstellkraft der Walze 1 wird durch die auf den Walzenzapfen wirkende, resultierende elastische Vorspannkraft vorgegeben. Die Vorspannkraft wird so eingestellt, daß die Walze 1 mit der erforderlichen Anstellkraft an die Gegenwalze 2 angedrückt wird. Die Walze 1 kann die erforderlichen Zustell- und Einstellbewegungen aufgrund der erfindungsgemäßen Lagerung ohne Reibungsverluste, d.h. ohne in der Praxis relevante Reibungsverluste, ausführen.

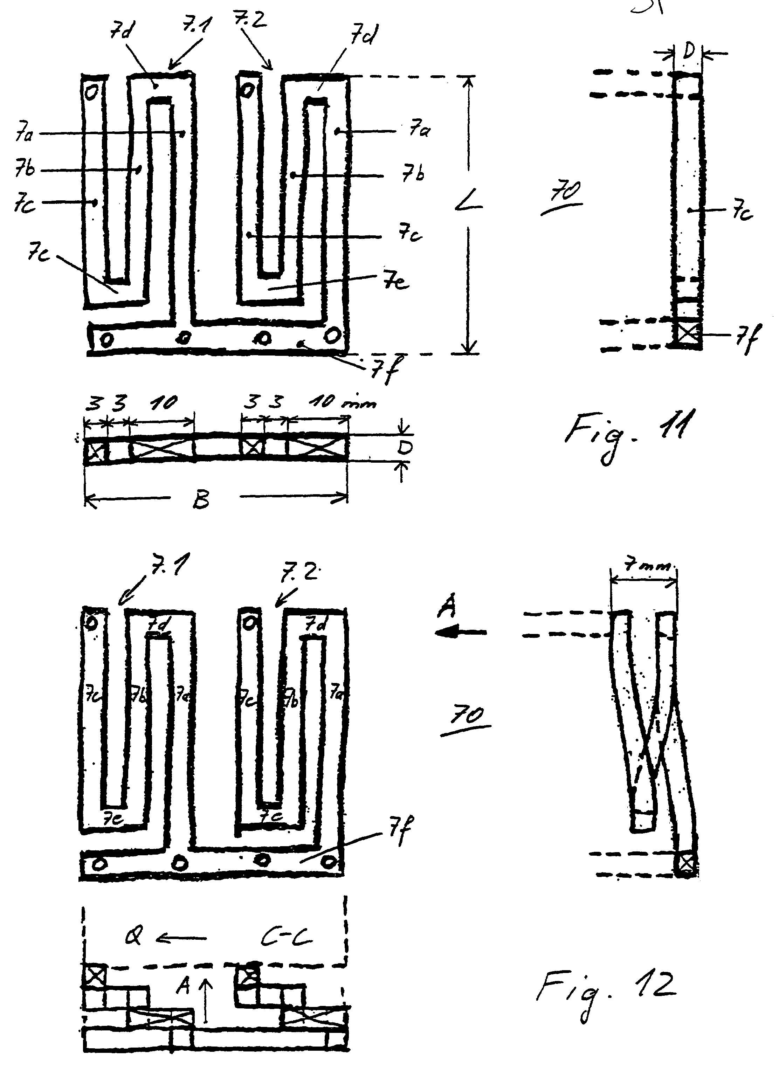

Der Einspannort der Federelemente 7 kann dem Maschinengestell M gegenüber verändert werden, um die auf die Walze 1 wirkende resultierende Federkraft im Hinblick auf eine optimale Walzenstellung einstellen zu können. Zu diesem Zweck wird der Schlitten 8 dem Maschinengestell M gegenüber in einer Ebene senkrecht zur Drehachse der Walze 1 verschoben. Die Verschiebung und Fixierung in der gewünschten Lage erfolgt gegenüber dem Führungsbock 10. Der Führungsbock 10 weist im Längsschnitt der Figur 4 gesehen eine T-Form auf. Das Mittelstück dient als Führungsteil 11 für den Schlitten 8 und der Querbalken des T dient mit seinen Flügeln als sicherndes Befestigungsteil 12 für den Schlitten 8 in der eingestellten Wunschlage. Mit seinem Führungsteil 11 durchragt der Führungsbock 10 den entsprechend durchbrochenen Schlitten 8 und ist in diesem Bereich mittels zweier Befestigungsschrauben 13 unverrückbar mit dem Maschinengestell M verbunden.

Der Schlitten 8 ist, wie am besten in Fig. 5 zu erkennen, als durchbrochene Rechteckplatte ausgebildet mit vier geraden Schenkeln, zwischen denen hindurch der Führungsbock 10 mit seinem Führungsteil 11 zur Seitenwand des Maschinengestells M ragt. Die Durchbrechung des Schlittens 8 ist in Anstellrichtung A und quer dazu ausreichend groß bemessen, so daß der Schlitten 8 relativ zum Führungsbock 10 im Bereich der Durchbrechung verschoben werden kann. Der Führungsteil 11 ist als einfacher Quader ausgebildet, dessen freie, innerhalb der Durchbrechung des Schlittens 8 liegende Oberflächen sich in Anstellrichtung A und rechtwinklig dazu erstrecken und so als Führungsflächen für den Schlitten 8 dienen. Der Schlitten 8 ist in Anstellrichtung A mittels zwei als Schrauben ausgebildeten ersten Einstellmitteln 15 und 16 an den beiden quer zur Anstellrichtung A weisenden Oberflächen des Führungsteils 11 abgestützt und wird relativ zum Führungsbock 10 quer zur Anstellrichtung A durch insgesamt vier als Schrauben ausgebildete zweite Einstellmittel 17 und 18 fixiert, wovon je zwei gegen die beiden sich in Anstellrichtung A erstreckenden, voneinander weg weisenden Oberflächen des Führungsteils 11 drücken. Die zwei zweiten Einstellschrauben 17 und 18 dienen ferner zur Führung des Schlittens 8 in und gegen die Anstellrichtung A beim Einstellen mithilfe der ersten Einstellmittel 15 und 16. Durch Verstellen der zweiten Einstellmittel 17 und 18 kann auch die Anstellrichtung A eingestellt werden; es kann auch eine Vorspannung quer zur Anstellrichtung eingestellt oder verstellt werden.

Die Federelemente 7 können bei entsprechender Wahl ihrer Gestalt, insbesondere ihrer Querschnittsform, nicht nur in Anstellrichtung A, sondern auch quer dazu zum Anstellen der Walze 1 vorgespannt werden.

Nachdem die Lage des Schlittens 7 relativ zum Führungsbock 10 und damit relativ zum Maschinengestell M mittels der ersten und zweiten Einstellmittel 15 bis 18 dem jeweiligen Einsatzfall optimal angepaßt eingestellt worden ist, wird diese Relativlage von Schlitten 8 und Führungsbock 10 mittels zwei als Schrauben ausgebildeten Sicherungsmitteln 14 gesichert. Nach Anziehen der Sicherungsschrauben 14 ist der Schlitten 8 fest an die beiden Flügelteile des Führungsbocks 10 angepreßt. Um die zum Einstellen erforderlichen Verschiebungen des Schlittens 8 zu ermöglichen, sind die für die Sicherungsschrauben 14 in den Flügelteilen des Führungsbocks 10 vorgesehenen Durchgangsbohrungen mit einem Durchmesser ausgeführt, der größer ist als der Durchmesser der Sicherungsschrauben 14. Dies ist am besten in Figur 4 zu erkennen.

Die Figuren 6 bis 8 zeigen die Lagerung der Zwischenwalze 1 der Figur 2. Die Lagerung wäre jedoch ebenso bei Ausbildung der Walze 1 als Reiterwalze entsprechend der Figur 1 geeignet. Bei schnellaufenden großen Zwischenwalzen hat sich die Lagerung nach den Figuren 5 bis 8, bei der die Walze 1 in und gegen die Anstellrichtung A zwangsgeführt wird, die federnd schwimmende Lagerung also nur in und gegen die Anstellrichtung erfolgt, besonders bewährt.

Bezüglich der grundsätzlichen Funktionsweise wird auf die vorstehende Beschreibung zur Lagerung nach den Figuren 3 bis 5 verwiesen. Insbesondere werden für Bauteile gleicher Funktion die bereits dort verwendeten Bezugszeichen ebenso benutzt.

Im Unterschied zur Lagerung nach den Figuren 3 bis 5 findet bei der Lagerung nach den Figuren 6 bis 8 eine Zwangsführung der Walze 1 in und gegen die Anstellrichtung statt, indem der Aufnahmekörper 6 quer zur Anstellrichtung A gegen die Kraft der Federelemente 7 versetzt ist und unter der Vorspannkraft der Federelemente 7 mit einem am Aufnahmekörper 6 angebrachten Führungsstück 26 gegen zwei als Rollen ausgebildete Führungsmittel 25a und 25b drückt. Die Rollen 25a und 25b sind in Anstellrichtung A gesehen am Führungsbock 10 hintereinander angeordnet. Die Andruck- und Führungsfläche des Führungsstücks 26 erstreckt sich dementsprechend ebenfalls in Anstellrichtung A. Der Führungsbock 10 ist zu diesem Zweck bis nahe zum Aufnahmekörper 6 hin verlängert und trägt an seiner dem Aufnahmekörper 6 zugewandten Stirnfläche die beiden Rollen 25a und 25b.

Wie am besten in Figur 8 zu erkennen, ist das Führungsstück 26 als Leiste ausgebildet, die im Bereich der Rollen 25a und 25b an der dem Führungsbock 10 zugewandten Stirnfläche des Aufnahmekörpers 6 angeschraubt ist. Das Führungsstück 26 ist am Aufnahmekörper 6 verstellbar angeordnet, insbesondere kann es quer zur Anstellrichtung verschoben und in seinen Verschiebelagen am Aufnahmekörper 6 fixiert werden. Hierdurch kann die Vorspannkraft der Federelemente 7 dem jeweiligen Einsatzfall optimal angepaßt und auch quer zur Anstellrichtung eingestellt werden. Auch die Anstellrichtung A kann damit auf einfache Weise verstellt oder eingestellt werden. Die Federelemente 7 der Lagerung nach den Figuren 6 bis 8 sind somit sowohl bezüglich der Anstellrichtung A als auch in einer Richtung quer dazu vorgespannt.

Im Ausführungsbeispiel der Figuren 6 bis 8 ist eine Verstellung des Schlittens 8 lediglich in und gegen die Anstellrichtung A möglich. Die Durchbrechung des Schlittens 8 ist so bemessen, daß für die Verstellung in und gegen die Anstellrichtung A genügend Platz verbleibt. An den sich in Anstellrichtung A erstreckenden Führungsflächen des Führungsbocks 10 wird der Schlitten 8 jedoch eng gleitgeführt. Dementsprechend sind auch nur die beiden ersten Einstellmittel 15 und 16 vorgesehen. Es wäre jedoch ebenso möglich, auch die Führung des Schlittens 8 des zweiten Ausführungsbeispiels wie die des ersten Ausführungsbeispiels auszubilden.

Die Lagerung nach den Figuren 6 bis 8 weist eine Sicherungseinrichtung auf, die sicherstellt, daß bei Bruch eines oder mehrerer der Federelemente 7 die Walze 1 aus ihrer Lagerung nicht herausgeschleudert werden kann. Die Sicherungseinrichtung bildet eine Notlagerung für die Walze 1. Die Sicherungseinrichtung wird durch einen Sicherungsbolzen 30 und eine Sicherungsbohrung 31 gebildet. Der Sicherungsbolzen 30 ragt von der dem Aufnahmekörper 6 zugewandten Oberfläche des Führungsbocks 10 ab und in die an der gegenüberliegenden Oberfläche des Aufnahmekörpers 6 ausgenommene Sicherungsbohrung 31 hinein. Die Mittellängsachsen des Sicherungsbolzens 30 und der Sicherungsbohrung 31 verlaufen beispielsweise in Verlängerung der Drehachse der Walze 1. Die Sicherungsbohrung 31 weist einen größeren Durchmesser auf als der Sicherungsbolzen 30, so daß der Sicherungsbolzen 30 bei intakter Lagerung berührungsfrei in der Sicherungsbohrung 31 aufgenommen ist. Bei Bruch eines oder mehrerer Federelemente 7 trägt der Sicherungsbolzen 30 im Zusammenwirken mit der Sicherungsbohrung 31 die Walze 1 und übernimmt die Funktion der Notlagerung zumindest bis zum Stillstand der Walze 1.

Figur 9 zeigt die erfindungsgemäße Lagerung mit einer erfindungsgemäßen Ausführungsform der Federelemente 7. Ansonsten kann die Lagerung jedoch dem des ersten oder zweiten Ausführungsbeispiels identisch entsprechen. Das Federelement 7 der Figur 9 weist zwischen seinem ersten Einspannort am Schlitten 8 und seinem zweiten Einspannort am Aufnahmekörper 6 eine erheblich vergrößerte wirksame Federlänge auf, die größer als der lichte Abstand zwischen den beiden Einspannorten ist. In der Draufsicht in Anstellrichtung A, d.h. im rechten Teil der Figur 9, weist das Federelement 7 eine Mäanderform auf. Im Ausführungsbeispiel wird jedes der Federelemente 7 durch drei beabstandet nebeneinander angeordnete Mäanderarme 7a, 7b und 7c in Form von Stäben und diese Stäbe verbindende Bügel 7d und 7e gleicher Stabform gebildet, die im Ruhezustand des Federelements in einer Ebene liegen; eine Aufspreizung in Anstellrichtung oder eine gewölbte Form wären auch denkbar.

Durch die Verlängerung der Federlänge bei gleichbleibendem Abstand des Aufnahmekörpers 6 von der Seitenwand des Maschinengestells M können der Federweg und die Federkraft optimiert werden. Die äußeren Abmessungen der erfindungsgemäßen Vorrichtung können dennoch unverändert bleiben. Es kann auch der Abstand zwischen Seitenwand und Walzendrehlager 5 verkürzt werden.

Figur 10 zeigt eine Lagerung mit Federelementen 7, die wie die Federelemente der Lagerung nach Figur 9 ausgebildet sind. Pro Lagerung werden wiederum vier der Federelemente 7 verwendet. Die Einstellung der Vorspannkraft der Federelemente 7 erfolgt mithilfe einer Einstellfeder 34. Die Einstellfeder 34 wirkt als Druckfeder. Sie wird beispielsweise durch ein Tellerfederpaket gebildet. Die Einstellfeder 34 ist so angeordnet und eingestellt, daß sie auf die Walze 1 eine gegen die Anstellrichtung A gerichtete Druckkraft ausübt. Die Federelemente 7 werden durch die Einstellfeder 34 in Anstellrichtung A vorgespannt.

Die Anstellfeder 34 wirkt zwischen dem Schlitten 8 und dem Aufnahmekörper 6. Der Schlitten 8 kann wie der Schlitten der vorbeschriebenen Ausführungsbeispiele ausgebildet oder ein einfaches Befestigungsmittel ohne Verstellmöglichkeiten sein. Vom Schlitten 8 ragt ein starr daran befestigter Kragarm ab in Richtung auf den Aufnahmekörper 6 zu. Vom Aufnahmekörper 6 ragt ebenfalls starr ein Kragarm ab in Richtung auf die Seitenwand des Maschinengestells M zu. Diese beiden Kragarme weisen in der Draufsicht quer zur Anstellrichtung A in der linken Hälfte der Figur 10 einen Überlappungsbereich auf. In diesem Überlappungsbereich ist am Kragarm des Schlittens 8 ein Bolzen 33 in und gegen die Anstellrichtung A frei verschiebbar gelagert. Zwischen dem Kragarm und einem flanschartigen Kopf des Bolzens 33 ist die Einstellfeder 34 eingespannt. In Verlängerung des Bolzens 33 ist in und gegen die Anstellrichtung A hin und her verstellbar ein als Schraube ausgebildetes Verstellmittel 32 am Kragarm des Aufnahmekörpers 6 gehalten. Das Verstellmittel 32 drückt gegen den Kopf des Bolzens 33 und dadurch auf die Einstellfeder 34. Die Druckkraft der Einstellfeder 34 wird durch eine Verstellbewegung des Verstellmittels 32 eingestellt und verstellt.

Die federnd schwimmende Lagerung Federelemente 7 werden durch die derart einstellbare Einstellfeder 34 so vorgespannt bzw. belastet, daß die Kraft der Einstellfeder 34 die Walze 1 von der oder den Gegenwalzen wegdrückt. Die von einer Gegenwalze und den beidseits der Walze 1 vorgesehenen Einstellfedern 34 auf die Walze 1 ausgeübten Kräfte wirken in die gleiche Richtung. Die Vorspannung der Federelemente 7 und gleichzeitig auch die der Einstellfeder 34 kann durch das Verstellmittel 32 verstellt werden. Bei maximaler Vorspannung der Federelemente 7 berührt die Walze 1 die Gegenwalze bzw. Gegenwalzen nicht mehr.

Durch Reduzieren der Vorspannung, d.h. durch Lösen des Verstellmittels 32, können die Walzen wieder in Kontakt gebracht und anschließend durch Verstellen des Verstellmittels 32 exakt eingestellt werden. Mit diesem Einstellen wird die Einstellfeder 34 entlastet, nämlich um die Kraft, mit der die Walze 1 an die Gegenwalze bzw. Gegenwalzen angedrückt wird. Hierbei gilt, daß die auf die Walze 1 wirkende, resultierende Kraft gleich der von den Federelementen 7 ausgeübten Kraft minus der von der Einstellfeder 34 ausgeübten Kraft ist.

Durch den Einsatz der Einstellfeder 34 bzw. der wenigstens einen Einstellfeder 34 pro Walzenende, kann die Walze 1 auf besonders einfache Weise eingestellt werden. Die Einstellung bzw. Verstellung ist auf einfache Weise auch bei Walzen mit unterschiedlichen Druchmessern möglich, beispielsweise aufgrund eines Nachschleifens der Walzen um bis zu mehrere Millimeter. Die Lagerung eignet sich auch besonders für den Fall, daß die Walze 1 mit nur geringer Anstellkraft an Ihre Gegenwalze bzw. Gegenwalzen angedrückt oder gar davon weggedrückt werden muß. Letzteres ist beispielsweise der Fall, wenn hohe Anstelldrücke bereits durch das Eigengewicht der Walze entstehen.

Figur 11 zeigt ein Doppelfederelement 70, daß zwei der erfindungsgemäß ausgebildeten Federelemente 7 zu einer Baueinheit zusammenfaßt. Das Doppelfederelement 70 ist in Figur 11 im unbelasteten Zustand in einer Draufsicht und zwei Seitenansichten dargestellt. Das Doppelfederelement 70 ist wie jedes einzelne Federelement 7 auch ein plattenförmiges Bauteil bzw. ein Plattengebilde.

Die zwei jeweils in der Draufsicht in Anstellrichtung A mäanderförmigen Federelemente 7 laufen an ihren Befestigungsenden in einer schmalen Befestigungsplatte 7f aus, die mit Bohrungen zur Befestigung beispielsweise am Schlitten 8 versehen ist. Jedes der Federelemente 7 wird durch drei Mäanderarme 7a, 7b und 7c gebildet, von denen die Mäanderarme 7a und 7b durch einen Verbindungssteg 7d und die Mäanderarme 7b und 7c durch einen weiteren Verbindungssteg 7e miteinander verbunden sind. Die Mäanderarme 7a, 7b und 7c bilden hintereinander geschaltete Biegebalken unter der Anstellkraft der Walze 1. Hierfür verläuft die Mäanderform so, daß der erste Mäanderarm 7a von der schmalen Befestigungsplatte 7f abragt, in den wieder auf die Befestigungsplatte 7f zuragenden zweiten Mäanderarm 7b übergeht und dieser schließlich durch den wieder von der Befestigungsplatte 7f abragenden dritten Mäanderarm 7c fortgesetzt wird. Am frei auslaufenden letzten Mäanderarm, dem dritten Mäanderarm 7c, wird die Last befestigt. Dieses Ende stellt somit das Lastende dar.

Das Plattengebilde 70 mit den beiden Federelementen 7 weist eine Dicke D im Bereich von 2 bis 5 mm, eine Länge L im Bereich von 50 bis 100 mm und eine Breite B ebenfalls im Bereich von 50 bis 100 mm auf. Im Ausführungsbeispiel betragen die Dicke D etwa 3 mm, die Länge L etwa 70 mm und die Breite B etwa 80 mm. Die Mäanderarme 7a, 7b und 7c sowie die Verbindungsstege 7d und 7e sind im Querschnitt quadratisch, wobei die Querschnittsform dem Anwendungsfall angepaßt auch anders gewählt werden kann. Das gesamte Plattengebilde 70 ist einstückig aus einem metallischen Federmaterial, insbesondere Federstahl, gefertigt, wobei das Plattengebilde 70 auch aus mehreren dünnen Platten schichtweise aufgebaut sein kann. Es können auch Einzelfederelemente 7, d.h. ohne verbindende Befestigungsplatte 7f, vorgesehen sein.

Figur 12 zeigt das Federplattengebilde 70 in den gleichen Ansichten wie Figur 11, jedoch im belasteten Zustand unter der Einwirkung einer lediglich in Anstellrichtung A wirkenden Anstellkraft. Im aufgespreizten Zustand, dargestellt in den Seitenansichten der Figur 12, weist das Federplattengebilde 70 eine Aufweitung von etwa 7 mm auf verglichen mit der Ausgangsdicke D von etwa 3 mm.

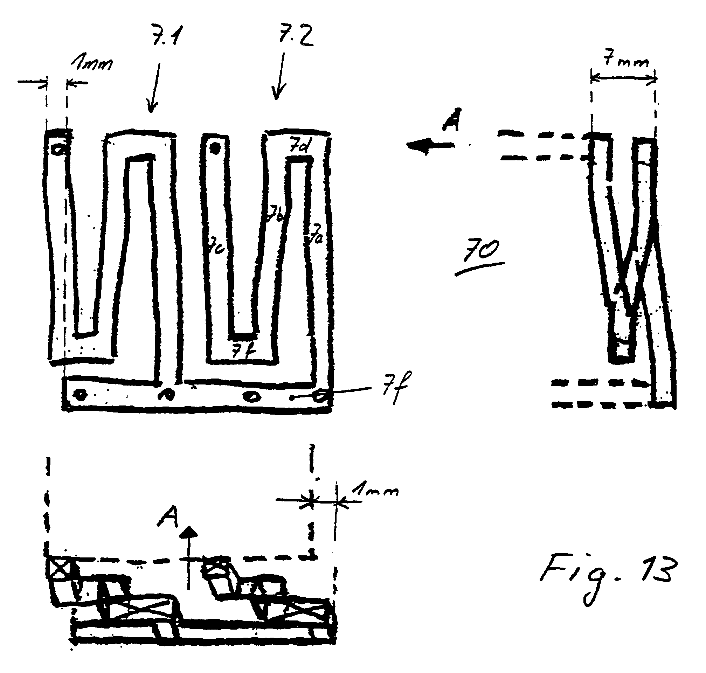

Figur 13 zeigt das Plattengebilde 70 unter der Wirkung einer in Anstellrichtung A und in Querrichtung Q dazu wirkenden Last. Die Querlast kann beispielsweise wie bei der Lagerung nach den Figuren 6 bis 8 aufgebracht werden. Die Aufweitung des Federplattengebildes 70 und jedes der Einzelfederelemente 7 in Querrichtung Q beträgt im angenommenen Anwendungsfall der Feder etwa 1 mm.

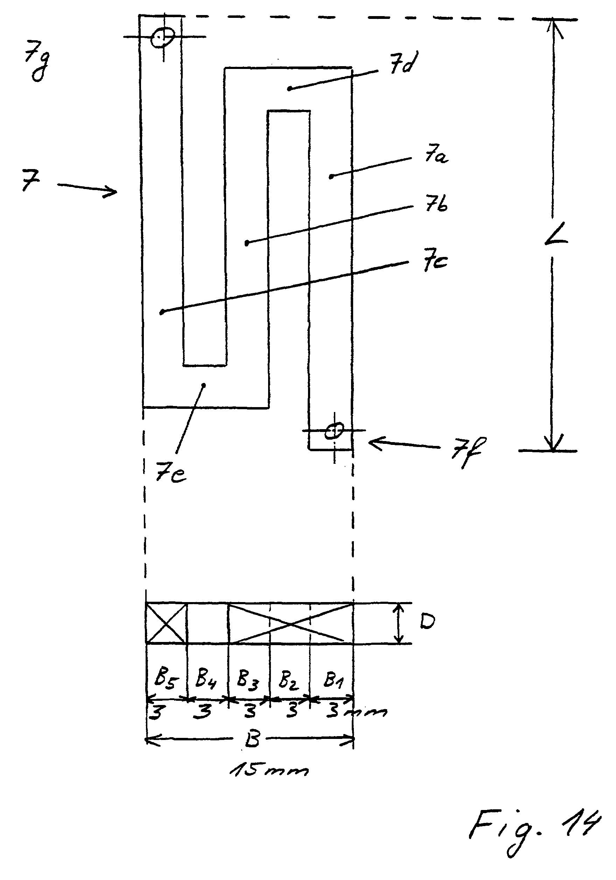

Figur 14 zeigt ein einzelnes Federelement 7, wie es in den Ausführungsbeispielen nach den Figuren 9 bis 13 jeweils mehrfach verwendet wird. Auch für die Abmessungen des Federelements gilt das vorstehend Gesagte, wobei die wirksame Länge jedes der Mäanderarme 7a, 7b und 7c, d.h. diejenige Länge die beispielsweise der erste Mäanderarm 7a zwischen seiner Einspannstelle und seinem freien Ende aufweist, um einige Millimeter kürzer ist als die Gesamtlänge L. Die wirksamen Längen der Mäanderarme 7a, 7b und 7c betragen zwischen 40 und 100 mm, im Ausführungsbeispiel betragen sie 50 bis 80 mm. Die Querschnittsfläche eines einzelnen der Mäanderarme beträgt zwischen 1 und 20 mm², vorzugsweise zwischen 5 und 15 mm². Die Gesamtbreite B eines einzelnen Federelements 7 beträgt zwischen 10 und 30 mm.

## Patentansprüche

1. Biegefederelement, wenigstens umfassend:
a) ein Befestigungsende (7f), mit dem das Biegefederelement (7) an einem Stützkörper (M), von dem Stützkörper (M) abragend befestigbar ist,
b) ein Lastende (7g) und
c) einen sich zwischen dem Befestigungsende (7f) und dem Lastende (7g) erstreckenden, federelastisch biegbaren Biegebereich, der eine Mäanderform aufweist mit Mäanderarmen (7a, 7b, 7c), die im eingebauten Zustand des Biegefederelements (7) von dem Stützkörper (M) abwechselend abragen und wieder auf den Stützkörper (M) zuragen.

2. Biegefederelement nach Anspruch 1 oder 2 , **dadurch gekennzeichnet, daß** wenigstens zwei Biegefederelemente (7) ein einziges Bauteil bildent zu einem Doppelfederelement (70) zusammenfaßt sind, wobei die wenigstens zwei Biegefederelemente (7) an ihren Befestigungsenden und/oder ihren Lastenden miteinander verbunden sind.

3. Biegefederelement nach Anspruch 1, **dadurch gekennzeichnet, daß** das Biegefederelement aus einer Platte oder schichtweise aus mehreren dünnen Platten oder Plättchen aus federelastischem Material, insbesondere Federstahl, gefertigt ist.

4. Biegefederelement nach wenigstens einem der vorhergehenden Ansprüche, **dadurch gekennzeichnet, daß** die Mäanderarme (7a, 7b, 7c) stabförmig und parallel voneinander beabstandet über Verbindungsbügel (7d, 7e) fortgesetzt miteinander verbunden sind, wobei das Befestigungsende (7f) nur mit dem ersten der Mäanderarme (7a, 7b, 7c) verbunden ist.

5. Biegefederelement nach wenigstens einem der vorhergehenden Ansprüche, **dadurch gekennzeichnet, daß** das Biegefederelement (7) ein Plattengebilde ist mit einer Dicke im Bereich von 1 bis 5 mm, einer Gesamtlänge L im Bereich von 50 bis 100 mm und einer Breite B von 50 bis 100 mm, wobei die Länge L zwischen dem Befestigungsende (7f) und dem Lastende (7g) in Biegebalkenrichtung und die Breite B senkrecht dazu gemessen werden.

6. Lagerung einer Last zwischen einander zugewandten Flächen von zwei Stützkörpern (M), **dadurch gekennzeichnet, daß** an jeder der einander zugewandten Stützkörperflächen wenigstens ein Federelement (7) nach wenigstens einem der vorhergehenden Ansprüche befestigt und mit der Last (1) verbunden ist.

7. Lagerung nach dem vorhergehenden Anspruch, **dadurch gekennzeichnet, daß** die Last (1) durch einen Rotationskörper einer Druckmaschine, insbesondere eine Farboder Feuchwerkswalze, gebildet wird, der beidseitig in je einer Lagerschale (5) gelagert ist, die mittels wenigstens eines Federelements (7) mit einem den Stützkörper (M) bildenden Maschinengestell verbunden ist.

8. Lagerung nach dem vorhergehenden Anspruch, **dadurch gekennzeichnet, daß** der Rotationskörper in seiner beidseitigen Lagerung federnd in und gegen wenigstens einen Gegenrotationskörper (2; 3, 4) schwimmend gelagert ist.

9. Lagerung nach dem vorhergehenden Anspruch, **dadurch gekennzeichnet, daß** die Lagerschale (5) mit dem Maschinengestell (M) nur mittels des Federelements (7) oder der mehreren Federelemente (7) verbunden ist.

10. Lagerung nach wenigstens einem der Ansprüche 6 bis 9, **dadurch gekennzeichnet, daß** pro Lager wenigstens zwei Federelemente (7) vorgesehen sind.

11. Lagerung nach wenigstens einem der Ansprüche 6 bis 10, **dadurch gekennzeichnet, daß** das Federelement (7) mittels einer Einstellfeder (34) vorgespannt wird.

12. Lagerung nach wenigstens einem der Ansprüche 6 bis 11, **dadurch gekennzeichnet, daß** das Federelement (7) mit seinem Befestigungsende (7f) an einem Schlitten (8) befestigt ist, der an einem an einer Seitenwand des Maschinengestells (M) befestigten Führungsbock (10) verschiebbar aufgenommen und in seiner jeweiligen Verschiebelage festlegbar ist.

13. Lagerung nach wenigstens einem der Ansprüche 6 bis 12, **dadurch gekennzeichnet, daß** das Federelement (7) mit seinem Lastende (7g) an einem Aufnahmekörper (6) für die Lagerschale (5) befestigt ist, der von dem Federelement (7) quer zur Anstellrichtung (A) gegen einen am Maschinengestell (M) angebrachten Anschlag (25a, 25b) gedrückt und am Anschlag (25a, 25b) geführt wird.

## Claims

1. A flexural spring element, at least comprising:
a) a fastening end (7f) by which the flexural spring element (7) can be secured to a support body (**M**) so as to project from the support body (**M**),
b) a load end (7g) and
c) a flexural area which extends between the fastening end (7f) and the load end (7g) and is flexible in a resilient manner and which has a meander shape with meander arms (7a, 7b, 7c) which in the fitted state of the flexural spring element (7) project in an alternating manner from the support body (**M**) and project back again towards the support body (**M**).

2. A flexural spring element according to Claim 1 or 2 [*sic*], **characterized in that** at least two flexural spring elements (7) are combined into a double-spring element (70) so as to form a single component, wherein the at least two flexural spring elements (7) are connected to each other at their fastening ends and/or their load ends.

3. A flexural spring element according to Claim 1, **characterized in that** the flexural spring element is produced from a plate or in layers from a plurality of thin plates or platelets of resilient material, in particular spring steel.

4. A flexural spring element according to at least one of the preceding Claims, **characterized in that** the meander arms (7a, 7b, 7c), in the form of rods and spaced parallel to one another, are connected to one another in a continuous manner by way of connecting yokes (7d, 7e).

5. A flexural spring element according to at least one of the preceding Claims, **characterized in that** the flexural spring element (7) is a plate structure with a thickness in the range of from 1 to 5 mm, an overall length **L** in the range of from 50 to 100 mm and a width **B** of from 50 to 100 mm, wherein the length **L** is measured between the fastening end (7f) and the load end (7g) in the direction of the bending arm and the width **B** is measured at a right angle thereto.

6. A mounting of a load between mutually facing faces of two support bodies (**M**), **characterized in that** at least one flexural spring element (7) according to at least one of the preceding Claims is fastened to each of the mutually facing faces of the support bodies and is connected to the load (1).

7. A mounting according to the preceding Claim, **characterized in that** the load (1) is formed by a rotating body of a printing machine, in particular an inking or a dampening roller, which is mounted at both ends in a respective bearing shell (5) which is connected by means of at least one spring element (7) to a machine support forming the support body (**M**).

8. A mounting according to the preceding Claim, **characterized in that** the rotating body is mounted in a resilient manner in its mounting at both ends and in a floating manner in and towards at least one counter rotating body (2; 3, 4).

9. A mounting according to the preceding Claim, **characterized in that** the bearing shell (5) is connected to the machine support (**M**) only by means of the spring element (7) or the plurality of spring elements (7).

10. A mounting according to at least one of Claims 6 to 9, **characterized in that** at least two spring elements (7) are provided *per* bearing.

11. A mounting according to at least one of Claims 6 to 10, **characterized in that** the spring element (7) is pre-stressed by means of an adjustment spring (34).

12. A mounting according to at least one of Claims 6 to 11, **characterized in that** the spring element (7) is fastened by its fastening end (7f) to a slide (8) which is received in a displaceable manner on a guide stand (10) fastened to a lateral wall of the machine support (**M**) and can be fixed in its respective displacement position.

13. A mounting according to at least one of Claims 6 to 12, **characterized in that** the spring element (7) is fastened by its load end (7g) to a receiving body (6) for the bearing shell (5) which is pressed by the spring element (7) transversely to the application direction (**A**) against a stop (25a, 25b) attached to the machine support (**M**) and is guided on the stop (25a, 25b).

## Revendications

1. Élément de ressort de flexion qui comprend au moins
a) une extrémité de fixation (7f) avec laquelle l'élément de ressort de flexion (7) peut être fixé à un corps d'appui (M) en faisant saillie du corps d'appui (M),
b) une extrémité de charge (7g) et
c) une zone de flexion flexible, ayant l'élasticité d'un ressort, qui s'étend entre l'extrémité de fixation (7f) et l'extrémité de charge (7g) et qui présente une forme en méandres ayant des bras de méandres (7a, 7b, 7c) lesquels alternativement font saillie du corps d'appui (M) et reviennent de nouveau sur le corps d'appui (M) dans l'état monté de l'élément de ressort de flexion (7).

2. Élément de ressort de flexion selon la revendication 1, **caractérisé en ce qu'**au moins deux éléments de ressort de flexion (7) formant un seul composant sont rassemblés en un élément double de ressort (70), les éléments de ressort de flexion (7) au moins au nombre de deux étant reliés l'un à l'autre à leurs extrémités de fixation et/ou à leurs extrémités de charge.

3. Élément de ressort de flexion selon la revendication 1, **caractérisé en ce que** l'élément de ressort de flexion est fabriqué dans une plaque ou par couches dans plusieurs plaques ou plaquettes minces en un matériau élastique, en particulier en acier à ressorts.

4. Élément de ressort de flexion selon au moins l'une des revendications précédentes **caractérisé en ce que** les bras de méandres (7a, 7b, 7c) sont reliés l'un à l'autre en continu par des boucles de liaison (7d, 7e) à distance l'une de l'autre parallèlement et sous forme de barrette, l'extrémité de fixation (7f) étant seulement reliée au premier des bras en méandres (7a, 7b, 7c).

5. Élément de ressort de flexion selon au moins l'une des revendications précédentes **caractérisé en ce que** l'élément de ressort de flexion (7) est un complexe de plaques d'une épaisseur comprise entre 1 et 5 mm, d'une longueur totale L comprise entre 50 et 100 mm et d'une largeur B comprise entre 50 et 100 mm, la longueur L entre l'extrémité de fixation (7f) et l'extrémité de charge (7g) étant mesurée en direction des soufflets de flexion et la largeur B perpendiculairement à celle-ci.

6. Support d'une charge entre des surfaces orientées l'une vers l'autre de deux corps d'appui (M), **caractérisé en ce qu'**au moins un élément de ressort (7) selon l'une au moins des revendications précédentes est fixé sur chacune des surfaces de corps d'appui orientées l'une vers l'autre et est relié à la charge (1).

7. Support selon la revendication précédente, **caractérisé en ce que** la charge (1) est formée par une pièce de révolution d'une machine à imprimer, en particulier d'un rouleau encreur ou d'un rouleau mouilleur, lequel de chaque côté est à chaque fois monté au moyen d'au moins un élément de ressort (7) dans une coquille de coussinet (5) qui est reliée à un bâti de machine formant le corps d'appui (M).

8. Support selon la revendication précédente, **caractérisé en ce que** la pièce de révolution est monté dans son logement bilatéral de façon flottante et élastique dans et contre au moins un corps de rotation opposé (2 ; 3, 4).

9. Support selon la revendication précédente, **caractérisé en ce que** la coquille de coussinet (5) est reliée au bâti de machine (M) uniquement au moyen de l'élément de ressort (7) ou des nombreux éléments de ressort (7).

10. Support selon au moins l'une des revendications 6 à 9, **caractérisé en ce que** l'on prévoit au moins deux éléments de ressort (7) par coussinet.

11. Support selon au moins l'une des revendications 6 à 10, **caractérisé en ce que** l'élément de ressort (7) est précontraint au moyen d'un ressort de réglage (34).

12. Support selon au moins l'une des revendications 6 à 11, **caractérisé en ce que** l'élément de ressort (7) est fixé par son extrémité de fixation (7f) à un chariot (8) qui est reçu de façon déplaçable sur un support de guidage (10) fixé à une paroi latérale du bâti de machine (M) et qui peut être maintenu dans chacune de ses positions de déplacement.

13. Support selon au moins l'une des revendications 6 à 12, **caractérisé en ce que** l'élément de ressort (7) est fixé par son extrémité de charge (7g) à une pièce de réception (6) pour la coquille de coussinet (5), pièce qui est repoussée contre une butée (25a, 25b) disposée sur le bâti de machine (M) par l'élément de ressort (7) transversalement à la direction de mise en place (A) et est guidé sur la butée (25a, 25b).
